# EUROPEAN PATENT APPLICATION

(11) **EP 4 545 246 A1**
(43) Date of publication of application: **30.04.2025**
(21) Application number: 23859787.6
(22) Date of filing: 19.06.2023
(51) Int. Cl.: B23Q 3/00

(54) **POSITIONING AND FIXING DEVICE**

(30) Priority: 30.08.2022 JP 2022136913
(71) Applicant: PASCAL ENGINEERING CORPORATION, Itami-shi Hyogo 664-8502 (JP)
(72) Inventor: TAKAHASHI, Takuya, Itami-shi, Hyogo 664-8502 (JP)
(74) Representative: Prüfer & Partner mbB Patentanwälte · Rechtsanwälte
(86) International application number: PCT/JP2023/022558
(87) International publication number: WO 2024/048017

(57) **Abstract**

A positioning and fixing apparatus comprises a rod member fixed to a first mechanism, a cylinder mechanism provided in a second mechanism, a first member having a first reference surface serving as a reference for positioning in a first direction, and a second member abutting against the rod member and having a second reference surface serving as a reference for positioning at least in a second direction orthogonal to the first direction. The second member is movable relative to the first member at least in the first direction. The cylinder mechanism is capable of attracting the rod member in the first direction toward the second mechanism.

## Description

### TECHNICAL FIELD

The present technology relates to a positioning and fixing apparatus.

### BACKGROUND ART

PTLs 1 to 4 indicated below are cited for a positioning and fixing apparatus for positioning and fixing an object to be fixed (a workpiece pallet, a mold, or the like to which a workpiece to be machined is attached) on a base body.

### CITATION LIST

### PATENT LITERATURE

PTL 1: WO 2021/079749
PTL 2: German Patent No. 102011080504
PTL 3: European Patent No. 2764952
PTL 4: German Patent Laying-Open No. 10317336

### SUMMARY OF INVENTION

### TECHNICAL PROBLEM

A positioning and fixing apparatus is required to provide large clamping force and significantly accurate positioning.

### SOLUTION TO PROBLEM

According to the present technology, a positioning and fixing apparatus is capable of relatively positioning a first mechanism and a second mechanism and also fixing the first mechanism and the second mechanism to each other.

The positioning and fixing apparatus comprises a rod member fixed to a first mechanism, a cylinder mechanism provided in a second mechanism, a first member having a first reference surface serving as a reference for positioning in a first direction, and a second member abutting against the rod member and having a second reference surface serving as a reference for positioning at least in a second direction orthogonal to the first direction. The second member is movable relative to the first member at least in the first direction. The cylinder mechanism is capable of attracting the rod member in the first direction toward the second mechanism.

### ADVANTAGEOUS EFFECTS OF INVENTION

According to the present technology, the second member is movable relative to the first member in the first direction, and the first member and the second member can each have a positioning function in a direction different than each other. Specifically, the positioning in the first direction can be performed by the first member having the first reference surface, and the positioning in the second direction can be performed by the second member having the second reference surface.

Furthermore, the second member has the second reference surface abutting against the rod member to perform the positioning in the second direction, and the rod member producing a clamping force can have a positioning function. The member producing a fixing, clamping force and also serving as a positioning member allows the positioning and fixing apparatus to have a limited space effectively utilized to position and fix the first mechanism and the second mechanism.

As a result, the positioning and fixing apparatus can achieve significantly accurate positioning and fixing while providing enhanced clamping force.

### BRIEF DESCRIPTION OF DRAWINGS

Fig. 1 is a cross section showing a clamped state (or a first state) of a positioning and fixing apparatus.
Fig. 2 is an enlarged view showing a vicinity of an engagement tool in the state shown in Fig. 1.
Fig. 3 is a cross section showing a mechanism (or a second mechanism) on the side of a base body in an unclamped state (or a second state) of the positioning and fixing apparatus.
Fig. 4 is a top view of the mechanism shown in Fig. 3.
Fig. 5 is a bottom view of the mechanism shown in Fig. 3.
Fig. 6 is a cross section showing a mechanism (or a first mechanism) on the side of an object to be fixed that is separated from the mechanism (or the second mechanism) on the side of the base body.
Fig. 7 is a top view of the mechanism shown in Fig. 6.

### DESCRIPTION OF EMBODIMENTS

Hereinafter, an embodiment of the present technology will be described. Identical or equivalent components are identically denoted and may not be described repeatedly.

Note that, in an embodiment described below, when a number, an amount, and the like are referred to, the scope of the present technology is not necessarily limited to the number, the amount, and the like unless otherwise specified. Furthermore, in the following embodiment, each constituent element is not necessarily essential to the present technology unless otherwise specified. Furthermore, the present technology is not necessarily limited to what achieves all of the functions and effects referred to in the present embodiment.

Note that in the present specification, the words "comprise," "include" and "have" are open-ended forms. That is, when a configuration is included, a configuration other than that configuration may or may not be included.

Furthermore, in the present specification, when a geometric term and a term representing a positional/directional relationship, for example, terms such as "parallel," "orthogonal," "obliquely 45°," "coaxial," or "along," etc. are used, the terms permit manufacturing errors or slight variations. In the present specification, when a term representing a relative positional relationship such as an "upper side" or a "lower side" is used, the term is used as a term indicating a relative positional relationship in one state, and the relative positional relationship can be inverted or rotated to any angle depending on in which direction each mechanism is set (for example, the whole mechanism is vertically inverted).

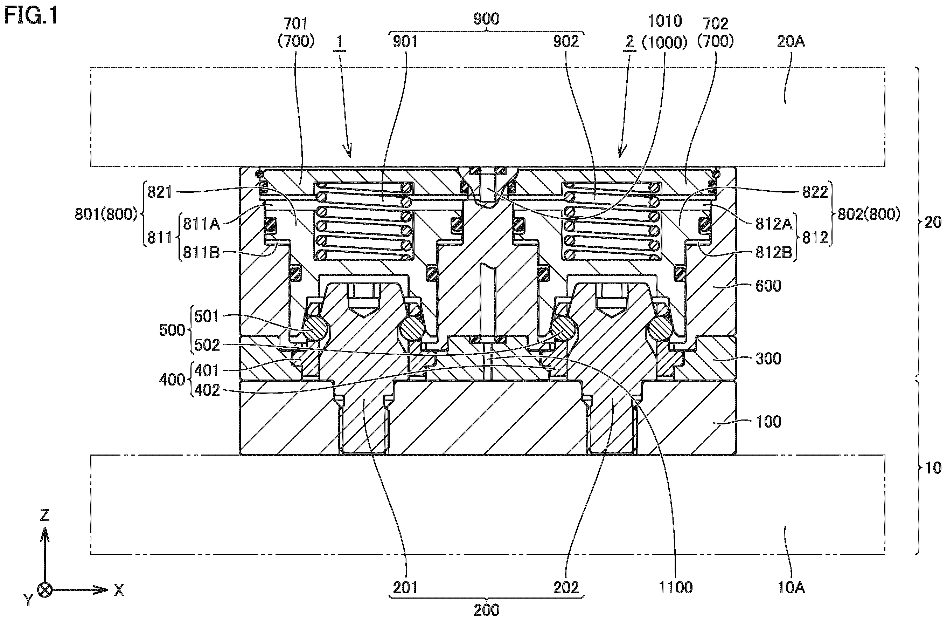

Fig. 1 is a cross section showing a clamped state (or a first state) of a positioning and fixing apparatus. The positioning and fixing apparatus shown in Fig. 1 is capable of relatively positioning a first mechanism 10 and a second mechanism 20 (in a direction along an X axis, a direction along a Y axis, and a direction along a Z axis) and also fixing first mechanism 10 and second mechanism 20 to each other.

As shown in Fig. 1, first mechanism 10 includes a pallet 10A (an object to be fixed). Second mechanism 20 includes a base body 20A. For example, a workpiece to be cut is attached to pallet 10A. Pallet 10A is an example of an object to be fixed, and the object to be fixed in the present technology is not limited thereto. For example, instead of pallet 10A, a mold may be used as the object to be fixed. Base body 20A may be fixed to a stationary object or may be in a movable state as it is supported by a rotational supporting mechanism or the like. Furthermore, the positioning and fixing apparatus according to the present technology is also applicable to a robot (a robotic arm or the like).

In first mechanism 10, a base plate 100 is attached to pallet 10A. A rod member 200 is screwed to base plate 100. Rod member 200 is provided so as to project from base plate 100 toward second mechanism 20.

Second mechanism 20 is provided with a seat member 300 (or a first member) so as to face base plate 100. An annular member 400 (or a second member) is attached to seat member 300. Annular member 400 is disposed substantially concentrically with rod member 200.

Second mechanism 20 further includes an engagement tool 500, a housing 600, a cap member 700, a cylinder mechanism 800, and a biasing member 900.

Engagement tool 500 is held by annular member 400. Housing 600 configures cylinder mechanism 800 together with cap member 700. Housing 600 may be made of a lightweight material such as aluminum in order to reduce the positioning and fixing apparatus in weight. Seat member 300 may be formed of a material larger in hardness than housing 600 in order to improve accuracy in positioning. Engagement tool 500 engages with rod member 200 and transmits a driving force of cylinder mechanism 800 to rod member 200. Biasing member 900 is accommodated in cylinder mechanism 800.

In first mechanism 10, rod member 200 includes a plurality of (in the example of Fig. 1, a pair of) rod members 201 and 202. The paired rod members 201 and 202 are aligned in the direction along the X axis. In second mechanism 20, a plurality of clamping devices 1, 2 are formed. The plurality of clamping devices 1 and 2 include annular members 401 and 402, engagement tools 501 and 502, cap members 701 and 702, cylinder mechanisms 801 and 802, and biasing members 901 and 902, respectively.

Cylinder mechanisms 801 and 802 include cylinder chambers 811 and 812 and piston members 821 and 822, respectively. Cylinder chambers 811 and 812 are divided by piston members 821 and 822 into clamping chambers 811A and 812A and unclamping chambers 811B and 812B, respectively.

Biasing members 901 and 902 are provided in clamping chambers 811A and 812A, respectively. Biasing members 901 and 902 bias piston members 821 and 822 in a direction (a clamping direction) to cause piston members 821 and 822, respectively, to approach first mechanism 10. That is, biasing members 901 and 902 bias piston members 821 and 822, respectively, downward in Fig. 1.

Clamping devices 1 and 2 provided in second mechanism 20 have cylinder mechanisms 801 and 802 to drive piston members 821 and 822 toward a retracting side (in a direction to cause first mechanism 10 to approach second mechanism 20) and an advancing side (in a direction to move first mechanism 10 away from second mechanism 20). This switches a clamped state and an unclamped state of pallet 10A with respect to base body 20A.

An air passage 1000 (a fluid passage) that supplies cylinder mechanisms 801 and 802 with working air (or working fluid) is provided in housing 600 located between cylinder mechanisms 801 and 802. Seat member 300 is provided with a detection air passage 1100. Detection air passage 1100 is supplied with air for detecting whether base plate 100 is seated. Based on an increase in air pressure in detection air passage 1100, base plate 100 is detected to be in a seated state.

In the example of Fig. 1, the paired annular members 400 are both unrestrained with respect to seat member 300 in the direction along the Z axis (or a first direction) and slightly movable in the direction along the Z axis. That is, annular members 401 and 402 are held by seat member 300 and housing 600 with a slight gap in the direction along the Z axis.

Of the pair of annular members 400 shown in Fig. 1, annular member 401 is restrained by seat member 300 in the direction along the X axis (or a third direction). Annular member 402 is unrestrained by seat member 300 in the direction along the X axis (or the third direction) and slightly movable in the direction along the X axis. That is, annular member 401 is fitted to seat member 300 with substantially no gap in the direction along the X axis, and annular member 402 is fitted to seat member 300 with a slight gap in the direction along the X axis.

The paired annular members 400 shown in Fig. 1 are both restrained by seat member 300 in the direction along the Y axis (or a second direction). That is, annular members 401 and 402 are both fitted to seat member 300 with substantially no gap in the direction along the Y axis.

In other words, of the paired annular members 400 shown in Fig. 1, annular member 401 is slightly movable relative to seat member 300 in the direction along the Z axis (or the first direction) and restrained by seat member 300 in the direction along the Y axis (or the second direction) and the direction along the X axis (or the third direction). On the other hand, annular member 402 is slightly movable relative to seat member 300 in the direction along the Z axis (or the first direction) and the direction along the X axis (or the third direction) and restrained by seat member 300 in the direction along the Y axis (or the second direction).

In this way, the pair of annular members 400 shown in Fig. 1 is movable relative to seat member 300 at least in the direction along the Z axis (or the first direction).

As described above, the pair of annular members 401 and 402 with one annular member 402 alone movable in the direction along the X axis allows first mechanism 10 and second mechanism 20 to be combined while absorbing concentric displacement of rod members 201 and 202 in the direction along the X axis.

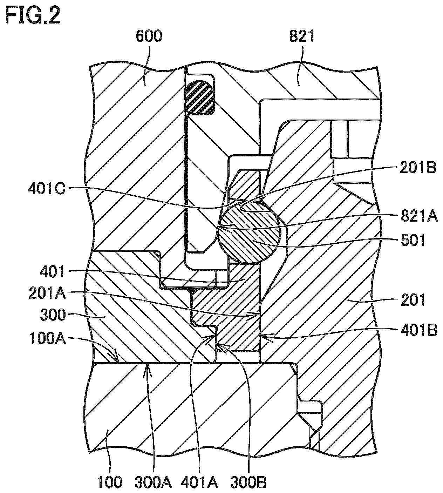

Fig. 2 is an enlarged view showing a vicinity of engagement tool 501 in the clamped state shown in Fig. 1. Note that while Fig. 2 shows a structure around engagement tool 501 of clamping device 1, a structure around engagement tool 502 of clamping device 2 is also the same as Fig. 2 except that annular member 402 is slightly movable in the direction along the X axis.

As shown in Fig. 2, base plate 100 has a major surface 100A, and rod member 201 has an outer peripheral surface 201A and a recess 201B.

Seat member 300 has a reference surface 300A (or a first reference surface) that serves as a reference for positioning in the direction along the Z axis, and a peripheral surface 300B that restrains annular member 401 in the direction along the X axis and the direction along the Y axis. Positioning in the direction along the Z axis is performed when seat member 300 has reference surface 300A abutting against major surface 100A of base plate 100.

Annular member 401 has an outer peripheral surface 401A that abuts against peripheral surface 300B of seat member 300, an inner peripheral surface 401B that abuts against outer peripheral surface 201A of rod member 201, and a holding portion 401C that holds engagement tool 501. Positioning in the direction along the X axis and the direction along the Y axis is performed when annular member 401 has inner peripheral surface 401B (or a second reference surface) abutting against outer peripheral surface 201A of rod member 201 and annular member 401 has outer peripheral surface 401A (or a third reference surface) abutting against peripheral surface 300B of seat member 300. Outer peripheral surface 201A of rod member 201 and outer peripheral surface 401A and inner peripheral surface 401B of annular member 401 are round in shape when viewed in the direction along the Z axis.

In the clamped state shown in Figs. 1 and 2, air pressure is supplied to clamping chambers 811A and 812A of cylinder mechanism 800. As a result, piston members 821 and 822 are driven downward in Figs. 1 and 2.

Piston member 821 of cylinder mechanism 801 has an inclined surface 821A that abuts against engagement tool 501. When piston member 821 is driven toward a clamping side (downward in Fig. 2), inclined surface 821A presses engagement tool 501 radially inwards toward base plate 100 (i.e., in an obliquely downward direction in Fig. 2). Engagement tool 501 pressed by inclined surface 821A presses annular member 401 toward pallet 10A (downward in the figure) and also engages with recess 201B of rod member 201 to press rod member 201 toward base body 20A (obliquely upward in the figure). A plurality of engagement tools 501 made of steel balls are aligned in a direction along a circumference of rod member 201. Rod member 201 pressed obliquely upward by each engagement tool 501 is driven upward in the figure, and base plate 100 is pressed against seat member 300. When this is done, positioning in the direction along the Z axis is performed by reference surface 300A of seat member 300, and positioning in the direction along the X axis and the direction along the Y axis is performed by outer peripheral surface 401A and inner peripheral surface 401B of annular member 401.

Biasing member 900 biases cylinder mechanism 800 in the clamping direction. Therefore, even when supplying the air pressure is interrupted, biasing member 900 exerting a biasing force maintains a positioned and fixed state.

Thus, the positioning and fixing apparatus according to the present embodiment can perform positioning in the direction along the Z axis by seat member 300 having reference surface 300A, and positioning in the direction along the X axis and the direction along the Y axis by annular member 401 having outer peripheral surface 401A and inner peripheral surface 401B. That is, seat member 300 and annular member 400 can each have a positioning function in a direction different than each other.

Furthermore, annular member 401 has inner peripheral surface 401B (or the second reference surface) abutting against outer peripheral surface 201A of rod member 201 to perform positioning in the direction along the X axis and the direction along the Y axis, and rod member 201 producing a clamping force can have a positioning function. The member producing a fixing, clamping force and also serving as a positioning member allows the positioning and fixing apparatus to have a limited space effectively utilized to position and fix first mechanism 10 and second mechanism 20. As a result, the positioning and fixing apparatus can achieve significantly accurate positioning and fixing while providing enhanced clamping force.

Accuracy in positioning can further be improved by inclining outer peripheral surface 201A of rod member 201 radially outward as the outer peripheral surface approaches the root of rod member 201(or a lower side in the figure).

Note that clamping device 2 has a slight gap formed between peripheral surface 300B of seat member 300 and annular member 402 in the direction along the X axis. Therefore, annular member 402 is unrestrained in the direction along the X axis and restrained in the direction along the Y axis alone. Therefore, in clamping device 2, by rod member 202 and annular member 402, of the direction along the X axis and the direction along the Y axis, the direction along the Y axis is alone subject to positioning. Clamping device 2 also allows seat member 300 to perform positioning in the direction along the Z axis. As clamping devices 1 and 2 including seat member 300, the pair of rod members 201 and 202, and annular members 401 and 402, are simultaneously actuated, positioning in the direction along the X axis, the direction along the Y axis, and the direction along the Z axis can be performed while absorbing an inter-pitch error of rod members 201 and 202 in the direction along the X axis.

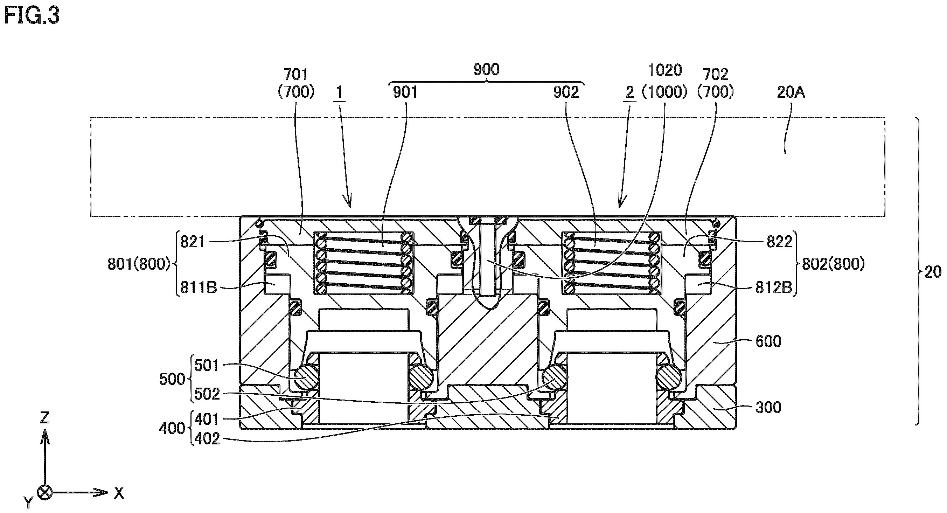

Reference will now be made to Figs. 3 to 7 to describe an unclamped state (or a second state) of the positioning and fixing apparatus.

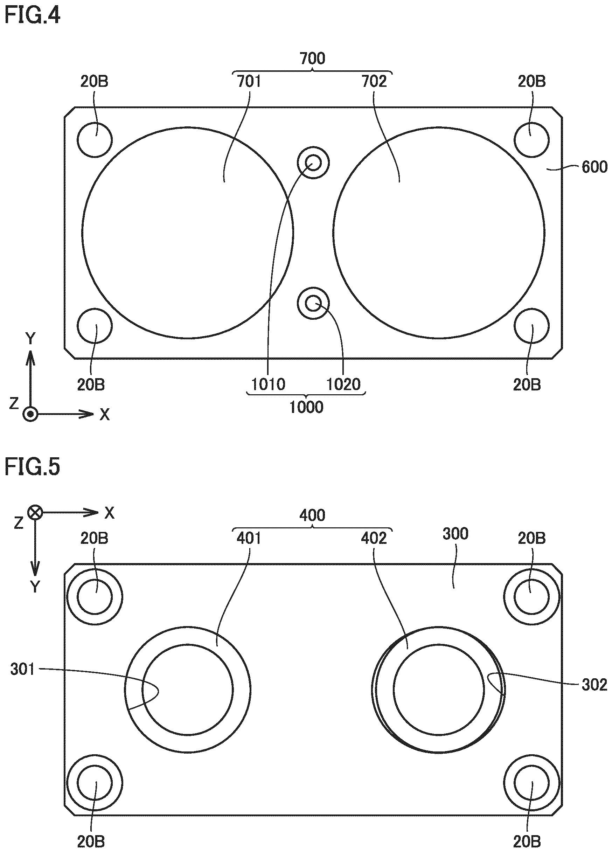

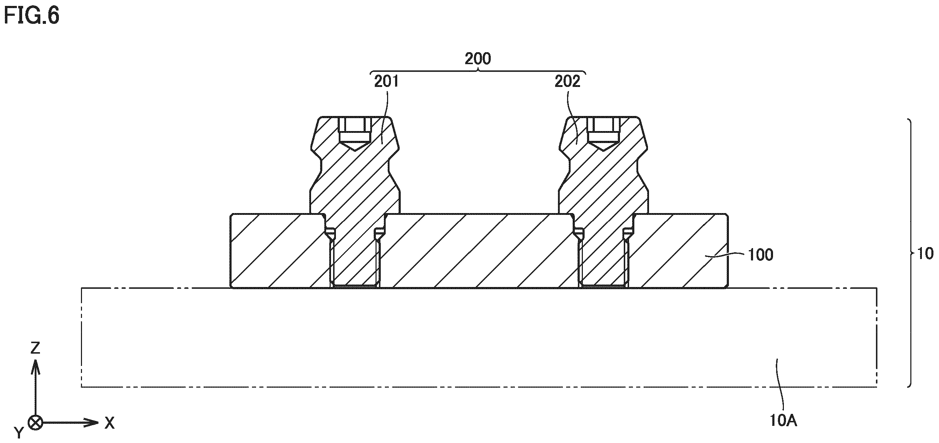

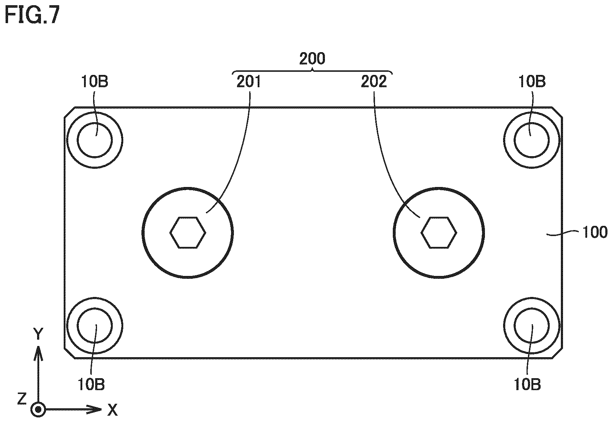

Fig. 3 is a cross section of second mechanism 20 in the unclamped state, and Figs. 4 and 5 are a top view and a bottom view, respectively, of second mechanism 20 shown in Fig. 3. Fig. 6 is a cross section of first mechanism 10 separated from second mechanism 20, and Fig. 7 is a top view of first mechanism 10 shown in Fig. 6.

When air pressure is supplied to unclamping chambers 811B and 812B of the cylinder mechanism from the clamped state shown in Figs. 1 and 2, piston members 821 and 822 are driven toward an unclamping side (upward in Fig. 3) against the biasing force of biasing members 901 and 902, as shown in Fig. 3. As a result, engagement tool 500 is disengaged from rod member 200, and rod member 200 is detachable from second mechanism 20.

As shown in Figs. 4 and 5, second mechanism 20 has housing 600 and seat member 300 screwed to base body 20A via a mounting hole 20B. An air passage 1010 for supplying clamping chambers 811A and 812A with working air pressure and an air passage 1020 for supplying unclamping chambers 811B and 812B with working air pressure are formed to be aligned in the direction along the Y axis.

As shown in Fig. 5, annular members 401 and 402 are fitted into fitting holes 301 and 302, respectively, provided in seat member 300. Fitting holes 301 and 302 define peripheral surface 300B of seat member 300. Fitting hole 301 is round in shape. Therefore, annular member 401 is restrained by seat member 300 in the direction along the X axis and the direction along the Y axis. Fitting hole 302 has a shape slightly longer in the direction along the X axis than in the direction along the Y axis. Therefore, while annular member 402 is restrained by seat member 300 in the direction along the Y axis, annular member 402 is slightly movable relative to seat member 300 in the direction along the X axis. This can absorb an inter-pitch error of rod members 201 and 202 in the direction along the X axis.

As shown in Figs. 6 and 7, in first mechanism 10, base plate 100 is screwed to pallet 10A through a mounting hole 10B. As shown in Figs. 6 and 7, base plate 100 having a simple structure allowing the pair of rod members 201 and 202 to be provided suffices, and it is unnecessary for the user of the positioning and fixing apparatus to prepare a complicated configuration. Rod members 201 and 202 may be directly screwed to pallet 10A.

The positioning and fixing apparatus of the present embodiment allows the pair of clamping devices 1 and 2 to be used to perform positioning for displacement in the direction along the X axis, the direction along the Y axis and the direction along the Z axis, and for rotation about the three axes of the X-axis, the Y-axis and the Z-axis (and this is referred to in the present specification as "complete positioning"). Clamping devices 1 and 2 thus having a positioning function allows the positioning and fixing apparatus to have a limited space effectively utilized to completely position first mechanism 10 and second mechanism 20. As a result, a large clamping force and significantly accurate positioning can be co-established.

It should be noted, however, that the scope of the present technology is not limited to a case including a pair of clamping devices 1 and 2, and also includes a case with clamping device 1, 2 used alone.

When clamping device 1 is used alone, it is necessary to separately provide a mechanism to restrain rotation about the Z axis in order to perform complete positioning. When clamping device 2 is used alone, it is necessary to separately provide a mechanism to restrain displacement in the direction along the X axis and rotation about the Z-axis in order to perform complete positioning. For these mechanisms, a well-known structure is applicable. In either case, at least displacement in the direction along the Y axis and the direction along the Z axis and rotation about the X-axis and the Y-axis are restrained by the clamping device, and when this is compared with using a clamping device having no positioning function, the former can simplify a separately provided mechanism. The positioning and fixing apparatus can thus have a limited space effectively utilized to completely position first mechanism 10 and second mechanism 20. As a result, a large clamping force and significantly accurate positioning can be co-established.

While an embodiment of the present technology has been described above, it should be understood that the embodiment disclosed herein is illustrative and non-restrictive in any respect. The scope of the present technology is defined by the terms of the claims and intended to encompass any modification equivalent in meaning and scope to the terms of the claims.

### REFERENCE SIGNS LIST

1, 2 clamping device, 10 first mechanism, 10A pallet, 10B mounting hole, 20 second mechanism, 20A base body, 20B mounting hole, 100 base plate, 100A major surface, 200, 201, 202 rod member, 201A outer peripheral surface, 201B recess, 300 seat member, 300A reference surface, 300B peripheral surface, 301, 302 fitting hole, 400, 401, 402 annular member, 401A outer peripheral surface, 401B inner peripheral surface, 401C holding portion, 500, 501, 502 engagement tool, 600 housing, 700, 701, 702 cap member, 800, 801, 802 cylinder mechanism, 811, 812 cylinder chamber, 811A, 812A clamping chamber, 811B, 812B unclamping chamber, 821, 822 piston member, 821A inclined surface, 900, 901, 902 biasing member, 1000, 1010, 1020 air passage, 1100 detection air passage.

## Claims

1. A positioning and fixing apparatus capable of relatively positioning a first mechanism and a second mechanism and also fixing the first mechanism and the second mechanism to each other, comprising:
a rod member that is fixed to the first mechanism;
a cylinder mechanism that is provided in the second mechanism;
a first member that has a first reference surface that serves as a reference for positioning in a first direction; and
a second member that abuts against the rod member and has a second reference surface that serves as a reference for positioning at least in a second direction orthogonal to the first direction,
the second member being movable relative to the first member at least in the first direction,
the cylinder mechanism being capable of attracting the rod member in the first direction toward the second mechanism.

2. The positioning and fixing apparatus according to claim 1, wherein the second member is restrained by the first member in a third direction orthogonal to the first direction and the second direction.

3. The positioning and fixing apparatus according to claim 1, wherein the second member is movable relative to the first member in a third direction orthogonal to the first direction and the second direction.

4. The positioning and fixing apparatus according to claim 1, wherein
the second member is provided as a pair of such second members aligned in a third direction orthogonal to the first direction and the second direction,
one of the paired second members is movable relative to the first member in the third direction, and
the other of the paired second members is restrained by the first member in the third direction.

5. The positioning and fixing apparatus according to claim 1, wherein
the cylinder mechanism is provided as a pair of such cylinder mechanisms aligned in a third direction orthogonal to the first direction and the second direction, and
a fluid passage is provided between the paired cylinder mechanisms to supply the pair of cylinder mechanisms with a working fluid.

6. The positioning and fixing apparatus according to any one of claims 1 to 5, further comprising an engagement tool that engages with the rod member and transmits a driving force of the cylinder mechanism to the rod member, wherein the second member has a holding portion that holds the engagement tool.

7. The positioning and fixing apparatus according to any one of claims 1 to 6, the cylinder mechanism including a piston member and a cylinder chamber defined by the piston member, the positioning and fixing apparatus further comprising a biasing member that is provided in the cylinder chamber and biases the piston member in a direction to cause the rod member to approach the first mechanism.
